Europäisches Patentamt

European Patent Office

Office européen des brevets

(19)

(11) Veröffentlichungsnummer: **0 266 843 B1**

(12) **EUROPÄISCHE PATENTSCHRIFT**

(45) Veröffentlichungstag der Patentschrift: 03.07.91

(51) Int. Cl.5: **B23K 3/06**

(21) Anmeldenummer: **87202121.7**

(22) Anmeldetag: **03.11.87**

(54) **Vorrichtung zum Aufbringen tropfenförmiger Lotmengen Weichlot auf zu benetzende Flächen.**

(30) Priorität: **05.11.86 DE 3637631**

(43) Veröffentlichungstag der Anmeldung:
**11.05.88 Patentblatt 88/19**

(45) Bekanntmachung des Hinweises auf die
Patenterteilung:
**03.07.91 Patentblatt 91/27**

(84) Benannte Vertragsstaaten:
**CH DE FR GB IT LI NL**

(56) Entgegenhaltungen:
**EP-A- 0 169 948**

**IBM TECHNICAL DISCLOSURE BULLETIN,
Band 14, Nr. 8, Januar 1972, Seiten
2354-2355, New York, US; W.F. NORTHRUP et
al.: "Pulse jet solder deposition"**

**PATENT ABSTRACTS OF JAPAN, Band 7, Nr.
227 (M-248)[1372], 7. Oktober 1983;& JP-A-58
119 461 (HIGASHIYAMA DENKI KOGYO K.K)
15-07-1983**

**ENCYCLOPAEDIE BRITANNICA, Band X, Seite 90**

(73) Patentinhaber: **Philips Patentverwaltung
GmbH
Wendenstrasse 35 Postfach 10 51 49
W-2000 Hamburg 1(DE)DE**

Patentinhaber: **N.V. Philips' Gloeilampenfabrieken
Groenewoudseweg 1
NL-5621 BA Eindhoven(NL)CH FR GB IT LI NL**

(72) Erfinder: **Hieber, Hartmann, DR.-Ing.
Brunsberg 24
W-2000 Hamburg 54(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

**Beschreibung**

Die Erfindung bezieht sich auf eine Vorrichtung zum Aufbringen tropfenförmiger Lotmengen Weichlot auf zu benetzende Flächen mit einem Vorratsbehälter zur Aufnahme des Weichlotes, welcher mit einer Abgabedüse in Verbindung steht, und mit einem Druckgenerator und einer Heizvorrichtung.

Bei Lötverfahren, die mit Wiederaufschmelzen arbeiten, ist es erforderlich, die Anschlußflächen oder ähnliches mit Lot zu benetzen. Hierzu sind Verfahren bekannt, bei denen eine Lotpulverpaste durch Bedrucken auf die zu benetzende Flächen aufgebracht wird. Ferner ist es bekannt, die Anschlußflächen mittels galvanischer Beschichtung mit den metallischen Bestandteilen der Lotlegierung zu versehen.

Für die reprodzuzierbare Erzeugung von Weichlotverbindungen hoher Herstellungsgüte ist die Einhaltung verschiedener Randbedingungen erforderlich. Ein wichtiger Parameter ist hierbei die Dosierung der Lotmenge je Lötverbindung, die für das gleichmäßige Aufschmelzen, Benetzen und Erstarren eine entscheidende Rolle spielt. Bei den oben genannten Verfahren treten beim anschließenden Verlöten insbesondere dann Probleme durch ungleichmäßiges Benetzen des Lotes auf, wenn zu verlötende Bauelemente und damit auch die Abmessungen von deren Anschlußflächen verkleinert werden. Diese Probleme werden gegebenenfalls noch dadurch verschärft, daß in einem Lötprozeß Bauelemente und damit auch Lötstellen unterschiedlicher Abmessungen verlötet werden sollen. In diesen Fällen und auch für die Verlötung extrem kleiner Bauelemente und damit extrem kleiner Lötstellen sind die oben genannten Verfahren kaum mehr geeignet, da sie keine zuverlässigen und reproduzierbaren Weichlötverbindungen mehr herstellen können.

Ferner ist aus der US-A- 45 27 717 eine Vorrichtung zum Aufbringen flüssigen Lotes aus einer Düse bekannt. Die Vorrichtung weist dazu eine aufwendige mechanische Konstruktion auf, die unter anderem aus zwei Ventilen besteht, welche über Stangen mechanisch bewegt werden. Eine solche Mechanik ist mit vertretbarem Aufwand nicht in der Weise zu gestalten, daß sie kleine Lottropfen auf die zu benetztenden Stellen schleudert, d.h. ohne Berührung aufbringt, da dafür sehr kleine Druckanstiegszeiten in der Düse erforderlich sind, denen die Mechanik mit ihren Massen entgegen steht.

Aus der Veröffentlichung IBM Technical Disclosure Bulletin, Band 14, Nr. 8, Janaur 1972, Seiten 2354 bis 2355 ist ein System zur Ablagerung tropfenförmiger Lotmengen bekannt, in welchem das Weichlot durch Erwärmung zum Schmelzen gebracht und über einen Druckgenerator aus einer Abgabedüse tröpfchenweise auf die zu benetzende Stelle geschleudert wird.

Die Aufgabe der Erfindung besteht darin, eine einfache Vorrichtung anzugeben, mittels welcher auf wirtschaftliche Weise das Lot in genau vorherbestimmbaren und reproduzierbaren Mengen auf die zu benetzenden Flächen aufzubringen ist.

Diese Aufgabe ist erfindungsgemäß dadurch gelöst, daß der Vorratsbehälter in das hintere Ende eines rohrförmigen Kanals mündet, auf dessen mittlerem Bereich die Heizvorrichtung angeordnet ist und an dessen abgabedüseseitigem Bereich ein rohrförmiger piezoelektrischer Wandler und hinter diesem die Abgabedüse vorgesehen sind.

Einem ersten Ende des rohrförmigen Kanals wird aus einem Vorratsbehälter das Lot zugeführt. Etwa im mittleren Bereich ist der rohrförmige Kanal mit einer Heizvorrichtung versehen. An dem anderen Ende ist dann ein rohrförmiger piezoelektrischer Wandler auf dem rohrförmigen Kanal vorgesehen, hinter dem die Abgabedüse angeordnet ist. Auf diese Weise ist sichergestellt, daß mittels des piezoelektrischen Wandlers erzeugte Druckstöße das Lot in Richtung der Abgabedüse drücken, da das Lot in Richtung des Vorratsbehälters nicht entweichen kann, weil das in dem rohrförmigen Kanal zwischen dem piezoelektrischen Wandler und der Öffnung zum Vorratsbehälter hin befindliche Lot eine genügende Trägheit aufweist und ein Entweichen des Lotes infolge der kurzen Druckstöße des piezoelektrischen Wandlers in Richtung Vorratsbehälter nicht gestattet. Es ist auf diese Weise also ohne weitere Maßnahmen sichergestellt, daß die von dem piezoelektrischen Wandler erzeugten Druckstöße das Lot in der gewünschten Weise aus der Abgabedüse emittieren.

Diese Vorrichtung gestattet es, Lottropfen recht genau bekannter Größe, die von einer Abgabedüse emittiert werden, auf die zu benetzenden Stellen aufzubringen, da der als Druckgenerator eingesetzte piezoelektrische Wandler eine genaue Dosierung der Lottropfen erlaubt. Ein solcher Wandler weist einen einfachen Aufbau auf, unterliegt so gut wie keinem mechanischen Verschleiß und ist auf einfache Weise elektrisch ansteuerbar.

Durch geeignete Wahl der Anzahl von Lottropfen, die auf eine Fläche aufgebracht werden, ist es möglich, eine genau definierte Menge Lot auf eine Fläche aufzubringen. Damit ist eine Grundvoraussetzung dafür geschaffen, in einem Lötprozeß Anschlußflächen bzw. Lötstellen verschiedener Größe zu verlöten, da durch geeignete Wahl der Lotmengen für jede Anschlußfläche die Verlötzeit in etwa auf einen vorgegebenen Wert gebracht werden kann. Dies hat ferner den Vorteil, daß sich für mehrere, gegebenenfalls auch verschieden große Lötstellen ein nach der Verlötung in etwa gleiches Gefüge der Lötstellen ergibt. Das tröpfchenweise Aufbringen des Lotes mittels eines piezoelektrischen Wandlers aus einer Abgabedüse bietet ferner den Vorteil, daß eine Berührung der zu benetzenden Flächen bzw. Anschlüsse nicht erfolgt. Dies ist insbesondere für empfindliche Lötstellen sehr kleiner Größe von Bedeutung. Insbesondere für solche Lötstellen ist es von Vorteil, daß das Lot mittels des piezoelektrischen Wandlers aus der Abgabedüse recht genau auf eine gewünschte Stelle aufgebracht werden kann.

Nach einer Ausgestaltung der Erfindung ist vorgesehen, daß der Vorratsbehälter mit einem Gasdruck beaufschlagt ist. Eine Beaufschlagung des Vorratsbehälters und damit auch des rohrförmigen Kanals mit einem Gasdruck gestattet es, vor dem Aufbringen des Lotes auf eine Anschlußfläche oder ähnliches das Lot in dem rohrförmigen Kanal bis zur Öffnung der Abgabedüse hin zu drücken, so daß bei anschließenden, mittels des piezoelektrischen Wandlers erzeugten Druckstößen das Lot tröpfchenweise aus der Abgabedüse emittiert wird.

Ausführungsbeispiele der Erfindung werden anhand der Figuren näher erläutert. Es zeigen:
Fig. 1 die schematische Darstellung einer zur Ausübung des erfindungsgemäßen Verfahrens besonders geeigneten Vorrichtung,
Fig. 2 eine vergrößerte Darstellung eines piezoelektrischen Wandlers als Druckgenerator.

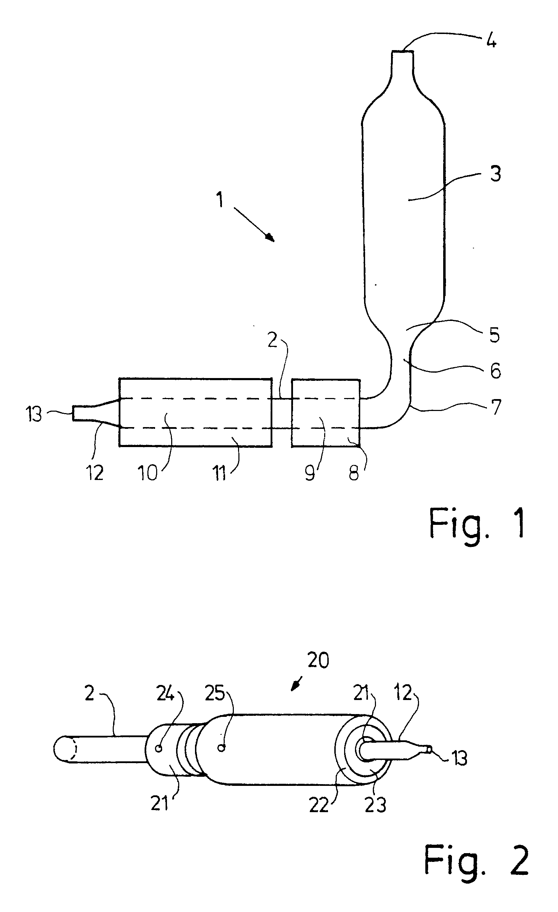

Eine in Fig. 1 schematisch dargestellte Vorrichtung 1 weist ein Glasrohr 2 und einen Vorratsbehälter 3 auf. Der Vorratsbehälter 3 verjüngt sich nach oben hin zu einer Einlaßöffnung 4 und nach unten zu einer Auslaßöffnung 5. Diese Auslaßöffnung 5 mündet in ein erstes Ende 6 des Glasrohrs 2. Hinter dem Ende 6 ist das Glasrohr in einem Bereich 7 um etwa 90° zur Auslaßöffnung 5 des Vorratsgefäßes 3 hin umgebogen. Das Glasrohr 2 verläuft im übrigen in etwa waagerecht. An den umgebogenen Bereich 7 des Glasrohrs 2 schließt sich ein etwa waagerecht verlaufender Bereich 9 des Glasrohrs 2 an. Auf diesem ist eine rohrförmige Heizvorrichtung 8 vorgesehen. Die Heizvorrichtung 8 ist in der Figur lediglich schematisch dargestellt; es kann sich z. B. um eine elektrische Heizwendeln handeln. An die Heizvorrichtung 8 schließt sich in einem Bereich 10 des Glasrohres 2 ein ebenfalls nur schematisch dargestellter Druckwandler 11 an. Hinter dem Druckwandler verjüngt sich das Glasrohr 2 zu einer Abgabedüse 12 hin, die eine Austrittsöffnung 13 aufweist.

Die Funktionsweise der in Fig. 1 dargestellten Vorrichtung ist folgende:
Das Vorratsgefäß 3 ist mit Stücken eines niedrigschmelzenden Weichlotes gefüllt, das über die Auslaßöffnung 5 des Vorratsbehälters und den Bereich 7 des Glasrohres 2 zur Heizvorrichtung 8 gelangt. In dieser Heizvorrichtung wird das Lot bis über seinen Schmelzpunkt aufgeheizt und gelangt in den Druckwandler 11 und bis zur Abgabedüse 12. Um das flüssige Lot in gewünschter Weise bis zur Austrittsöffnung 13 der Abgabedüse 12 zu drücken, ist die Einlaßöffnung 4 des Vorratsgefäßes 3 mit einem geeigneten, regelbaren Gasdruck beaufschlagt. Durch geeignete Einstellung des Gasdruckes wird das Lot gerade bis an die Austrittsöffnung 13 gedrückt. Die Bereiche 9, 10 des Glasrohrs 2 und die Abgabedüse 12 sind nun mit flüssigem Lot gefüllt, das keine Gasblasen mehr aufweisen darf. In diesem Zustand kann die Vorrichtung 1 dann dazu eingesetzt werden, mittels durch den Druckgenerator 11 erzeugter Druckstöße Lottröpfchen aus der Abgabedüse 13 auf eine zu benetzende Anschlußfläche oder ähnliches aufzubringen. Die von dem Druckgenerator 11 erzeugten Druckstöße drücken das in dem Glasrohr 2 befindliche Lot in Richtung der Abgabedüse 12, da das in den Bereichen 9 und 7 des Glasrohres 2 stehende Lot eine genügende Trägheit aufweist und das in dem Bereich 10 stehende Lot somit ausschließlich in Richtung der Abgabedüse 12 entweichen kann. Dieser Effekt wird noch dadurch verstärkt, daß auf das im Bereich 7 stehende Lot das im Vorratsgefäß 3 befindliche Lot drückt und daß das Vorratsgefäß 3 mit einem Gasdruck beaufschlagt ist.

Bei einer bevorzugten Ausführungsform wurden folgende Abmessungen gewählt:
Innendurchmesser des Glasröhrchens 2 in den Bereichen 9 und 10:  1 mm
Länge des Druckwandlers 11:  10 bis 20 mm
Länge des Bereiches 9 des Glasröhrchens 2:  30 mm
Durchmesser der Austrittsöffnung 13 der Abgabedüse 12:  100μm
Der in Fig. 1 lediglich schematisch dargestellte Druckwandler 11 kann beispielsweise ein in Fig. 2 dargestellter piezoelektrischer Wandler 20 sein. Der Wandler 20 ist auf dem Glasrohr 2 vorgesehen, das hinter dem piezoelektrischen Wandler 20 in die Abgabedüse 12 mit der Austrittsöffnung 13 mündet. In an sich bekannter Weise besteht der piezoelektrische Wandler 20 - in üblicher Weise mit der Abkürzung PXE bezeichnet - aus einer direkt auf der Außenfläche des Glasrohrs 2 aufliegenden inneren Elektrode 21, einer äußeren Elektrode 22 und einem dazwischenliegenden piezoelektrischen Element 23. Die innere Elektrode 21 ist an einer Seite um die Stirnseite des piezoelektrischen Elementes herum bis auf die Oberseite desselben gezogen und von der äußeren Elektrode 22 durch einen elektrischen, nicht-leitenden Spalt getrennt. Dadurch wird ein einfacher Anschluß von Anschlußdrähten 24 und 25 ermöglicht, von denen der Anschlußdraht 24 mit der Elektrode 21 und der Anschlußdraht 25 mit der Elektrode 22 verbunden ist. Durch Anlegen geeigneter Spannungspulse an die Anschlüsse 24 und 25 und damit an die Elektroden 21 und 23 kontrahiert das piezoelektrische Element 23 zu dem Glasröhrchen 2 hin und drückt dieses zusammen. Auf diese Weise wird in dem Glasröhrchen 2 befindliche flüssiges Lot aus der Austrittsöffnung 13 der Abgabedüse 12 emittiert.

Bei den oben angegebenen Größenparametern des Glasrohrs und der Austrittsdüse hat es sich dabei als vorteilhaft erwiesen, an die beiden Elektroden 24 und 25 elektrische Spannungspulse der Amplitude 200 bis 500 V, deren Dauer etwa 40 bis 100 $\mu$s und deren Folgezeit etwa 100 bis 300 $\mu$s betragen, anzulegen. Auf diese Weise werden in dem Wandler 20 Druckstöße erzeugt, die zum Ausstoß von Lottropfen führen, die etwa einen Durchmesser von 60 bis 80 $\mu$m aufweisen. Beim Auftreffen auf kältere Oberflächen erstarren diese Lottropfen dann in kurzer Zeit.

Das Aufbringen des Lottropfen auf verschiedene Lötstellen eines Werkstückes wird dieses relativ zur Abgabedüse bewegt. Es wird im allgemeinen von Vorteil sein, nicht die Abgabedüse, sondern die zu benetzenden Lötstellen eines Werkstückes zu bewegen und damit dieses relativ zur Abgabedüse in die gewünschte Position zu bringen. Die Genauigkeit der Lage der aufzubringenden Lottropfen wird dabei nur durch die Genauigkeit der Positionierung des Werkstückes bestimmt.

Das Lot wird dem Druckgenerator aus einem Vorratsbehälter und nach Durchlauf durch eine Heizvorrichtung zugeführt. Das Aufschmelzen des Lotes durch Erwärmung geschieht vorteilhafterweise durch eine im Flußverlauf des Lotes vor dem Druckgenerator vorgesehene Heizvorrichtung. Diese Heizvorrichtung kann in verschiedener Weise ausgestaltet sein; es hat sich eine Erwärmung des Lotes mittels Strahlungswärme als vorteilhaft erwiesen.

Als Lot wird eine eutektische Legierung aus wenigstens zwei der Elemente Blei, Zinn, Wismut und Indium eingesetzt. Eutektische Legierungen aus diesen Elementen haben relativ niedrige Schmelzpunkte. Dies ist von Vorteil, da das Lot in der Heizvorrichtung auf relativ niedrige Werte erhitzt werden muß und so auch der nachgeschaltete Druckgenerator thermisch nicht zu sehr belastet wird.

**Ansprüche**

1. Vorrichtung (1) zum Aufbringen tropfenförmiger Lotmengen Weichlot auf zu benetzende Flächen mit einem Vorratsbehälter (3) zur Aufnahme des Weichlotes, welcher mit einer Abgabedüse (12) in Verbindung steht, und mit einem Druckgenerator (11) und einer Heizvorrichtung (8), dadurch gekennzeichnet, daß der Vorratsbehälter (3) in das hintere Ende (6) eines rohrförmigen Kanals (2) mündet, auf dessen mittlerem Bereich (9) die Heizvorrichtung (8) angeordnet ist und an dessen abgabedüseseitigen Bereich (10) ein rohrförmiger piezoelektrischer Wandler (11) und hinter diesem die Abgabedüse (12) vorgesehen sind.

2. Vorrichtung nach Anspruch 1, dadurch gekennzeichnet, daß der Vorratsbehälter (3) mit einem regelbaren Gasdruck beaufschlagt ist.

**Claims**

1. A device (1) for applying droplet-shaped quantities of solder from a nozzle to surfaces to be wetted, comprising a supply container (3) for holding the solder, which supply container (3) is connected to a feed nozzle (12), to a pressure generator (11) and to a heating device (8), characterized in that the supply container (3) merges into the rear portion (6) of a tubular duct (2) on whose central portion (9) the heating device (8) is arranged and at whose region (10) near the feed nozzle a tubular piezoelectric transducer (11) is provided with the feed nozzle (12) situated downstream of it.

2. A device as claimed in Claim 1, characterized in that the supply container (3) is acted upon by a gas pressure.

**Revendications**

1. Dispositif (1) destiné à déposer des quantités de soudure tendre en forme de gouttes sur des surfaces à mouiller, muni d'un réservoir (3) destiné à recevoir la soudure tendre, et relié à une buse de sortie (12), d'un générateur de pression (11) et d'un dispositif de chauffage (8), caractérisé en ce que le réservoir (3) débouche dans l'extrémité arrière (6) d'un canal tubulaire (2), le dispositif de chauffage (8) étant disposé sur la partie centrale (9) de ce canal, alors qu'un générateur piézo-électrique (11) tubulaire et, derrière celui-ci, la buse de sortie (12) sont prévus sur la partie (10) du canal située du côté de la buse de sortie.

2. Dispositif selon la revendication 1, caractérisé en ce que le réservoir (3) est soumis à une pression gazeuse réglable.

Fig. 1

Fig. 2